# EUROPEAN PATENT SPECIFICATION

(11) **EP 2 646 315 B1**
(45) Date of publication and mention of the grant of the patent: **30.01.2019**
(21) Application number: 10861070.0
(22) Date of filing: 02.12.2010
(51) Int. Cl.: B63H 23/32, F16J 15/46, F16J 15/00, F16J 15/3232

(54) **SEAL ARRANGEMENT FOR A PROPELLER SHAFT AND METHOD FOR SEALING A PROPELLER SHAFT**
DICHTUNGSANORDNUNG FÜR EINE ANTRIEBSWELLE UND VERFAHREN ZUM ABDICHTEN EINER PROPELLERWELLE
AGENCEMENT D'ÉTANCHÉITÉ POUR UN ARBRE PORTE-HÉLICE ET PROCÉDÉ DE MONTAGE HERMÉTIQUE D'UN ARBRE PORTE-HÉLICE

(43) Date of publication of application: 09.10.2013
(73) Proprietor: ABB Oy, 00380 Helsinki (FI)
(72) Inventor: PALOKANGAS, Sami, FI-01900 Nurmijärvi (FI)
(86) International application number: PCT/FI2010/050993
(87) International publication number: WO 2012/085325

(56) References cited:
- EP-A1- 0 480 694
- EP-A1- 1 586 798
- WO-A1-01/79729
- WO-A2-2011/062484
- DE-A1- 3 817 660
- GB-A- 2 150 234
- GB-A- 2 205 365
- JP-A- 2003 026 094
- JP-A- 2006 234 101
- US-A- 3 338 583
- US-A- 5 137 116
- US-A- 5 683 278

## Description

The invention relates to an arrangement for sealing a propeller shaft of a ship according to the preamble part of Claim 1, and a method for sealing the propeller shaft of a ship according to the preamble part of Claim 6.

The propeller of a ship or a corresponding large watercraft is supported by bearings against the body of the ship or the propulsion unit. The propeller shaft has an arrangement of shaft seals between the body and the shaft to prevent the surrounding water from entering the body, and an arrangement of bearing seals on both sides of the bearing to prevent the bearing lubricant from leaking into the water or inside the body. The shaft seals must retain their sealing properties for as long as possible, as their reliability is of primary importance for the operation of the propulsion system and the reliability of the bearings that support the shaft. The shaft seals are located below the water surface, which means that hydrostatic pressure is directed at them. The shaft seals consist of several lip seals with seal chambers between them. This arrangement aims at distributing the total pressure differential into parts with the additional method of adjusting the pressure in the chambers by feeding air into the chambers or by connecting the chamber to an oil tank to keep the seal chamber pressure at the desired level through the hydrostatic pressure of the oil based on the force of gravity. Particularly in electric rudder propeller systems, in which the available space is very limited, all additional devices related to the shaft sealing system result in substantial space issues when using existing shaft sealing systems.

The service life of a shaft seal is affected by many factors, all of which must be brought to the best possible level. The most important factors affecting the performance and service life of the seal are the pressure differential over the lip seal, the temperature of the contact surface between the seal and the shaft, the circumferential speed of the outer surface of the shaft and the chemical impact of the lubricant affecting the seal material. The joint effect of these factors must be at an adequate and acceptable level to enable the seal to achieve its maximum service life according to its design.

The use of environmentally friendly oils, that is, biodegradable oils, sets additional requirements as their properties are more sensitive to factors such as the operating temperature.

A solution is known from the patent publication US 5,683,278 in which compressed air is used to adjust the pressure in the chambers between the seals. A similar arrangement is also known from EP 1 586 798 A.

The purpose of the invention is to create a new shaft sealing system, particularly suitable for limited spaces, which maintains the optimal conditions at the lip seal and maximizes the service life of the seals. The arrangement according to the invention is characterized by the features specified in the characteristics section of Claim 1. The method according to the invention is characterized by the features specified in the characteristics section of Claim 6. Other preferred embodiments of the invention are characterized by the features defined in the dependent claims.

An embodiment according to the invention lengthens the service life of the seal through the optimization of the operational conditions. The adjustment of the pressure in the internal chambers of the sealing system keeps the pressure differential over the lip seals as low as possible, making it optimal for the service life during the entire operational life of the system. The heat output created at the seal is transferred by the circulating oil into the frame of the rudder propeller device and further into the sea water, keeping the temperature at the seal adequately low.

The medium used to pressurize the internal chamber cools the seal interfaces to the temperature range that is optimal for the seal performance. The cooling effect particularly makes more effective the utilization of biodegradable oils, as their properties are particularly sensitive to high temperatures. Thus the solution offers better conditions for the use of environmentally friendly oils.

In applications in which the shaft sealing is located within the body of the ship or the propulsion unit, away from the immediate vicinity of the shaft and the body, , the water surrounding the ship does not necessarily cool the seal adequately. An embodiment according to the invention brings the cooling to an adequate level reliably and at low costs.

The invention enables the creation of optimal conditions for the seal in varying operational environments. As the draft of the ship changes, the pressure in the seal chambers is regulated so that the pressure differential over each lip seal is as low as possible. As the temperature of the environment, particularly the temperature of the water surrounding the propeller device, varies, the temperature of the seal contact surfaces can thus be kept as low as possible. Furthermore, the pressure in the chambers can be regulated according to the pressure of the surrounding water when the pressure variation is due to the operation of the ship. This will mainly concern CRP drives (Contra-Rotating Propeller drives) in which the pressure affecting the shaft line varies according to the ship operation condition.

An embodiment according to the invention introduces advantages related to manufacturing and production engineering. The same system suits many, even all, types of watercraft. An embodiment according to the invention can utilize standard seals, which guarantees availability and quality. The number of components required by the solution is small, resulting in lower costs and easier accommodation into the limited space of a rudder propeller device. The system can be designed into a modular composition, achieving benefits for the assembly and maintenance phases and the acquisition of raw materials. The system also includes measurement and adjustment devices which facilitate more effective condition monitoring, creating better prerequisites for life cycle management.

In the following, the invention will be described in more detail with the help of certain embodiments by referring to the enclosed drawings, where
- Figure 1 illustrates a propeller system in which the sealing arrangement according to the invention is applied, and
- Figure 2 illustrates a sealing arrangement according to the invention.

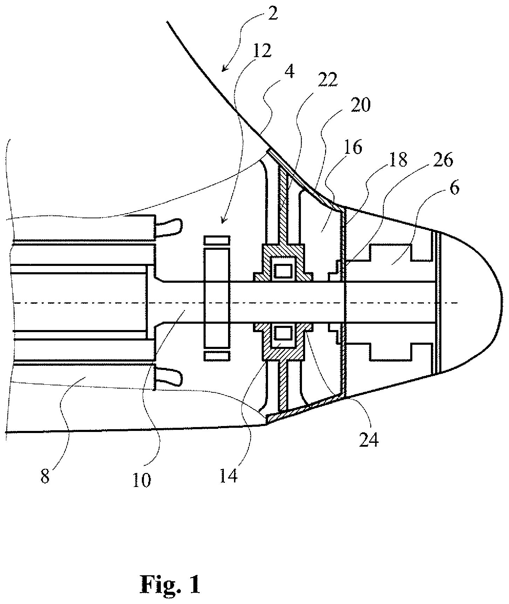

Figure 1 is a partial schematic illustration of a ship's propulsion unit 2, comprising a propulsion unit with an implementation of an arrangement according to the invention. The propulsion unit is a steering propeller device, which is attached to the ship body with a turning bearing arrangement. Such a steering propeller device is known, for example, by the product name AZIPOD®, which is a trade mark owned by ABB Oy. An electric motor 8 operating the propeller 6 is mounted inside the casing 4 of the propulsion unit 2. In this embodiment, the electric motor 8 is a synchronous motor with exciter 12 mounted to the propeller shaft 10 in a well-known way. The propeller shaft 10 is supported against the casing 4 of the propulsion unit 2 at both ends. Figure 1 only illustrates the bearing 14 at the propeller end 6, comprising a roller bearing. At the other end of the electric motor 8 another bearing is used in a known manner.

The propulsion unit casing 4 comprises an intermediate compartment 16 on the propeller 6 side between the propeller 6 and bearing 14. The walls of the intermediate compartment 16 comprise the wall 18 on the propeller side, the outer circumference 20 of the propulsion unit end and the support structure 22 of the bearing 14. The propeller shaft 10 passes through the intermediate compartment 16 at the center of it. At the bearing end of the intermediate compartment 16 there is the outer oil seal 24 of the bearing, preventing bearing lubricating oil from leaking out of the bearing housing. Correspondingly, at the motor end of the bearing 14 there is the inner oil seal 25 of the bearing. Shaft sealing 26 is fitted at the propeller end of the intermediate compartment 16, preventing surrounding water from entering the intermediate compartment 16. The intermediate compartment 16 is thus completely sealed, and in normal operating conditions, it is also free of any liquid. The shaft sealing 26 is fitted inside the closed intermediate compartment, enabling replacement of the sealing within the compartment.

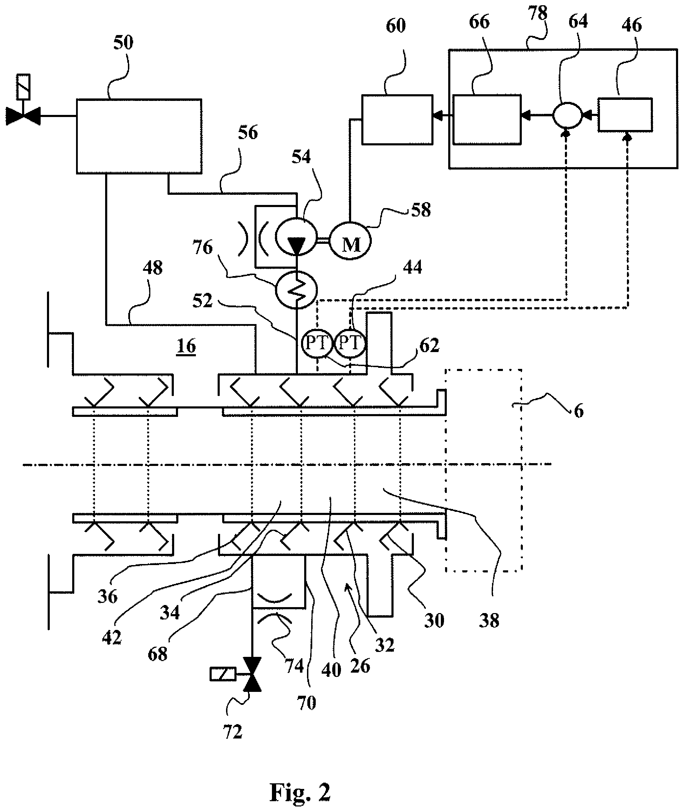

Figure 2 is a schematic illustration of the details of the shaft sealing 26 as well as the pressurization and lubrication system. The shaft sealing 26 consists of four lip seals 30, 32, 34 and 36 which are fitted consecutively in the direction of the shaft 10 so that chambers 38, 40 and 42 remain between adjacent lip seals. The pressure on outside of the lip seal 30 is the pressure resulting from the draft of the ship, for example 0.4-1.0 bar. The first chamber 38 closest to the propeller 6 is limited by the lip seals 30 and 32. The pressure on both sides of the contact surface of the lip seal 30 is essentially the same. The pressure in the first chamber 38 is constantly measured by the sensor 44. The measurement data is taken into the control unit 78. The control unit's 78 programming includes a PI controller 66, error variable management 64 and reference pressure measurement data processing 46. The control unit utilizes a software implementation, which is an inexpensive solution with no separate components. The first chamber is filled with water or oil, and its pressure essentially corresponds to the pressure of the surrounding water on the shaft line. The second chamber 42 of the shaft sealing 26, located furthest away from the propeller, is between the lip seals 34 and 36. The pressure in the second chamber is slightly higher than the air pressure in the intermediate compartment 16. The pressure in the second chamber is, for example, in the order of 0.1 bar, which pressure differential thus exists over the contact surface of the lip seal 36. The second chamber 42 is connected by a pipe 48 to the oil tank 50, which uses the force of gravity to keep the pressure of the second chamber stable at its rated value.

Between the first and the second chamber there is a third chamber 40, limited between the lip seals 32 and 34 and their contact surfaces facing the shaft. The third chamber 40 is connected to the oil tank 50 using a pipe 52, pump 54 and pipe 56. The pressure of the third chamber 40 is constantly regulated by the motor 58 operating the pump 54. The motor is controlled by a frequency converter 60. Pressure regulation devices are used to keep the pressure of the third chamber 40 at a value that corresponds to the pressure differential between the first and the second chamber so that the pressure differentials over the contact surfaces of the lip seals 32 and 34 are roughly the same. If the pressure in chamber 42, for example, is 0.1 bar and the pressure in the first chamber 38 depending on the draft is 0.7 bar, the pressure of the third chamber 40 is regulated at approximately 0.4 bar using the pump 54.

The pressure of the third chamber 40 is measured by a sensor 62. The measurement data is taken to the control unit 78. The PI controller 66 of the control unit calculates the rotation speed instruction to be sent to the frequency converter 60 based on the pressure measurement data 62 and 44. The second and third chambers are connected to a tank by discharge pipes 68 and 70 through a valve 72. A choker 74 is installed to the discharge pipe 70 for flow regulation. The choker is designed according to the maximum temperature of the seal chamber. The pressure regulation devices of this embodiment thus consist of a pump 54 and flow regulation choker 74. The operation of the pressure regulation devices is based on the pressure loss created by the choker 74 or another flow valve, due to the flow rate produced by the adjustable pump 54. The pressure loss created by the choker depends on the oil flow rate. The desired pressure in chamber 40 can thus be achieved by regulating the rotation speed of the pump by a frequency converter. Below the pump 54 the oil flow passes through a heat exchanger 76, which enables an efficient cooling function being achieved as a pressure regulation by-product through a simple arrangement. When the oil is warm and has low viscosity, the desired pressure in chamber 40 can only be achieved through a high flow rate. Due to the high flow rate, the cooling power is also at its best. When the oil is cold, the desired pressure can be achieved with a significantly lower flow rate. This means the oil that is already cool is not cooled unnecessarily. The heat exchanger may comprise, for example, a box that lies against the propulsion device frame, transferring the heat directly into the surrounding sea water. Alternatively, the oil tank can be located in the propulsion unit in an advantageous manner so that the tank is in contact with the surrounding water.

The described regulation system effectively keeps the pressures and temperature of the shaft sealing chambers within their rated values, ensuring the longest possible service life.

At the same time, the use of biodegradable oils becomes possible without compromising the functionality of the sealing.

The intermediate compartment solution enables the replacement of all seals without the need for taking the watercraft to a dry dock, which makes maintenance and repair work easier.

The pressure differentials over the lip seals are kept at the lowest possible level in a controlled manner as the draft of the watercraft and the weather conditions vary. As the actual pressure of the surrounding water is also constantly measured, the pressure changes due to the movements and operation of the watercraft are also taken into account, which is an important factor for the CRP drive.

The pressurization arrangement according to the invention is not dependent on the structure of the sealing, but can be applied to most shaft sealing arrangements. The arrangement suits different ship types and all draft levels with no need to adjust the height of the oil tank as the draft changes.

In summary, the arrangement requires fewer pipes, tanks, level detectors and control valves, which, together with the simple mechanical structure, lower the costs compared to a conventional system.

The arrangement includes embedded pressure and pressure level measurements and monitoring, which can be utilized for condition monitoring purposes.

In an alternative embodiment, a similar system can also be arranged so that a pump produces a fixed flow rate and the pressure of the seal chamber 40 is regulated so that the PI controller 66 steers an electric flow rate valve (not illustrated in the attached figures) instead of a frequency converter.

In the above the invention has been described with the help of a certain embodiment. However, the description should not be considered as limiting the scope of patent protection; the embodiments of the invention may vary within the scope of the following claims.

## Claims

1. A method for sealing a propeller shaft (10) for a ship by sealing (26), the said propeller shaft being supported against the body of the ship or propulsion unit with bearings (14), the sealing (26) comprising a group of lip seals (30, 32, 34, 36) which are fitted consecutively in the direction of the propeller shaft (10) so that a seal chamber (38, 40, 42) is created between adjacent lip seals (30, 32, 34, 36), whereby the pressure of the first seal chamber (38) on the propeller (6) side being kept essentially close to the pressure of the surrounding water at the propeller shaft level and the pressure of the second seal chamber (42) furthest from the propeller being kept at a fixed value essentially lower than that of the seal chamber (38) on the propeller side, the pressure of a third chamber (40), located between the chamber (38) on the propeller side and the second chamber (42) furthest from the propeller, is constantly adjusted to a value between the pressure values of the first (38) and the second chamber (42), **characterized in that** the same medium from one oil tank (50) is circulated through two or more seal chambers (38, 40, 42).

2. A method according to claim 1, **characterized in that** the pressure regulation devices are based on the pressure loss produced by a choker (74) or another flow control valve, the pressure loss being due to the flow rate produced by an adjustable pump (54).

3. A method according to claim 1, **characterized in that** the pressure regulation devices are based on the pressure loss created in a separate pressure regulation valve by a fixed flow produced by a fixed displacement pump.

4. A method according to any claim 1 to 3, **characterized in that** the medium used for pressure regulation passes through a heat exchanger (76), using the flow for cooling purposes.

## Patentansprüche

1. Eine Methode zur Abdichtung einer Propellerwelle (10) für ein Schiff durch Abdichtung (26), wobei die Propellerwelle gegen den Schiffskörper oder die Antriebseinheit mit Lagern (14) abgestützt wird, die Abdichtung (26) aus einer Reihe Lippendichtungen (30, 32, 34, 36) besteht, die der Reihe nach in Richtung Propellerwelle (10) eingebaut werden, sodass eine Dichtungskammer (38, 40, 42) zwischen den angrenzenden Lippendichtungen (30,32, 34, 36) erzeugt wird, wobei in der ersten Dichtungskammer (38) an der Seite des Propellers (6) grundsätzlich ein Druck aufrechterhalten wird, der dem des umgebenden Wassers auf Niveau der Propellerwelle in etwa entspricht, und in der zweiten, am weitesten vom Propeller entfernten Dichtungskammer (42) ein Druck aufrechterhalten wird, der im Wesentlichen niedriger als der der Dichtungskammer (38) auf der Propellerseite ist, und der Druck einer dritten Kammer (40) zwischen der Kammer (38) auf der Propellerseite und der zweiten, am weitesten vom Propeller entfernten Kammer (42) fortwährend auf einem Wert zwischen den Druckwerten der ersten (38) und der zweiten Kammer (42) aufrechterhalten wird, **gekennzeichnet dadurch, dass** das selbe Medium aus einem Öltank (50) durch zwei oder mehr Dichtungskammern (38, 40, 42) zirkuliert.

2. Eine Methode gemäß Anspruch 1, **gekennzeichnet dadurch, dass** die Druckregulierungsvorrichtungen auf dem Druckverlust basieren, der durch einen Choker (74) oder eine anderes Stromregelventil erzeugt wird, wobei der Druckverlust auf die durch eine einstellbare Pumpe (54) erzeugte Durchflussrate zurückzuführen ist.

3. Eine Methode gemäß Anspruch 1, **gekennzeichnet dadurch, dass** die Druckregulierungsvorrichtungen auf dem Druckverlust basieren, der in einem separaten Druckregelventil durch einen konstanten Durchfluss erzeugt wird, der von einer konstanten Verdrängungspumpe erzeugt wird.

4. Eine Methode gemäß Anspruch 1 bis 3, **gekennzeichnet dadurch, dass** das für die Druckregulierung verwendete Medium durch einen Wärmeaustauscher (76) läuft, wobei der Fluss für Kühlungszwecke verwendet wird.

## Revendications

1. Procédé de montage hermétique d'un arbre porte-hélice (10) pour un navire à l'aide d'un élément d'étanchéité (26), ledit arbre porte-hélice étant soutenu contre le corps du navire ou de l'unité de propulsion à l'aide de paliers (14), l'élément d'étanchéité (26) comprenant un groupe de joints à lèvre (30, 32, 34, 36) qui sont agencés les uns à la suite des autres dans la direction de l'arbre porte-hélice (10) de façon à ce que soit créée une chambre d'étanchéité (38, 40, 42) entre les joints à lèvre (30, 32, 34, 36) adjacents, moyennant quoi la pression de la première chambre d'étanchéité (38) du côté de l'hélice (6) est maintenue essentiellement proche de la pression de l'eau environnante au niveau de l'arbre porte-hélice et la pression de la deuxième chambre d'étanchéité (42) la plus éloignée de l'hélice est maintenue à une valeur fixe essentiellement inférieure à celle de la chambre d'étanchéité (38) du côté de l'hélice, la pression d'une troisième chambre (40), située entre la chambre (38) du côté de l'hélice et la deuxième chambre (42) la plus éloignée de l'hélice, est constamment réglée à une valeur comprise entre les valeurs de pression des première (38) et deuxième (42) chambres, **caractérisé en ce que** le même véhicule provenant d'un réservoir à huile (50) est mis en circulation à travers deux ou plus chambres d'étanchéité (38, 40, 42).

2. Procédé selon la revendication 1, **caractérisé en ce que** les dispositifs de régulation de pression se basent sur la perte de charge produite par un dispositif d'étranglement (74) ou un autre régulateur de débit, la perte de charge étant due au débit produit par une pompe réglable (54).

3. Procédé selon la revendication 1, **caractérisé en ce que** les dispositifs de régulation de pression se basent sur la perte de charge créée dans un régulateur de pression distinct par un débit constant produit par une pompe à débit constant.

4. Procédé selon l'une quelconque des revendications 1 à 3, **caractérisé en ce que** le véhicule utilisé pour la régulation de pression passe à travers un échangeur de chaleur (76), en utilisant l'écoulement à des fins de refroidissement.
